# EUROPEAN PATENT APPLICATION

(11) **EP 4 215 303 A1**
(43) Date of publication of application: **26.07.2023**
(21) Application number: 20950779.7
(22) Date of filing: 28.08.2020
(51) Int. Cl.: B23B 51/00

(54) **DRILL BLADE FOR DRILLING HARD MATERIALS AND DRILL BIT**

(71) Applicant: Robert Bosch GmbH, 70442 Stuttgart (DE)
(72) Inventor: ANGHILERI, Massimo, Hangzhou Zhejiang 310052 (CN); JI, Haifeng, Hangzhou Zhejiang 310052 (CN); PEDRETTI, Andrea, Hangzhou Zhejiang 310052 (CN)
(86) International application number: PCT/CN2020/112058
(87) International publication number: WO 2022/041109

(57) **Abstract**

A drill bit for drilling hard materials, comprising a drill blade (1). The drill blade defines a rotation axis (O) and comprises: a first side (11) and a second side (12) that are located on two transversal sides of the rotation axis; a blade tip (A) that is transversally offset with respect to the rotation axis; and a first cutting edge (21) and second cutting edge (22) starting from the blade tip and ending at the first side and the second side, respectively, wherein the angular bisector (X) between the first and second cutting edges is inclined at an angle (Θ) with respect to the rotation axis.

## Description

### Technical Field

The disclosure relates to a drill blade for drilling hard materials and a drill bit comprising such a drill blade.

### Background Art

Many drill bits for drilling hard materials comprise a symmetric drill blade. When a drill blade drills into a workpiece, each cutting edge of it is subjected to a pressure force from the workpiece. For two cutting edges which are symmetric, they contact the workpiece in their whole lengths and thus there is a large contact area between the two cutting edges and the workpiece. It has been found that the drilling speed of a drill bit depends on the intensity of the contact pressure between the cutting edges and the workpiece. As the contact area between the cutting edges and workpiece becomes larger, the intensity of pressure between them becomes smaller, which results in decreasing of the drilling speed. For increasing the intensity of pressure between the cutting edges and the workpiece to increase the drilling speed, attention can be paid to decreasing the thickness of the drill blade or increasing the sharpness of the cutting edge, which, however, will generally result in quick consumption of the drill blade.

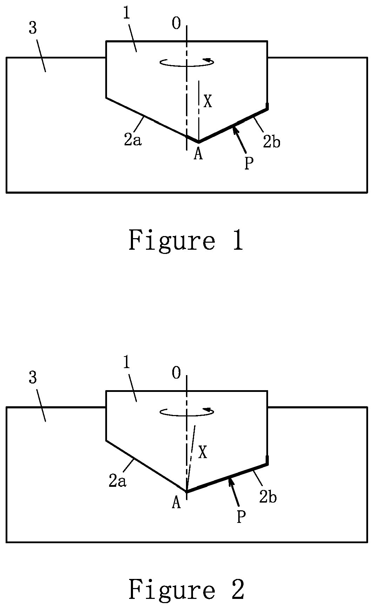

Figure 1 shows an eccentric drill blade 1 according to prior art, in which an apex A between two cutting edges 2a and 2b is offset from the rotation axis O of the drill in drilling by a lateral distance. The two cutting edges are oblique with respect to the rotation axis O by the same oblique angle and thus the bisector X of the angle formed between the two cutting edges is parallel to the rotation axis O. When such a drill blade 1 drills into a workpiece 3, only a portion of the cutting edges (represented by thickened lines in the Figure), which is on one side with respect to the rotation axis O (the same side with the apex A), receives a pressure force P from the workpiece and effectively cuts the workpiece so the intensity of pressure between the effective cutting edge portion and the workpiece is increased and the drilling speed is thereby increased. However, the pressure force P received by the drill blade from the workpiece is only on one side with respect to the rotation axis O, while there is no pressure force from the workpiece on the other side, so the drill blade is subjected to a lateral component of force that comes from only one side, which has negative effects on drilling precision and service life of the drill blade.

Figure 2 shows another eccentric the drill blade 1 according to prior art, in which an apex A between two cutting edges 2a and 2b is on the rotation axis O of the drill in drilling, and the two cutting edges are oblique with respect to the rotation axis O by different oblique angles so the bisector X of the angle formed between the two cutting edges is oblique from the rotation axis O by an angle. When such a drill blade drills into a workpiece, only the cutting edge (represented by thickened lines in the Figure) on one side receives a pressure force P from the workpiece. As a result, although the drilling speed is increased, the drill blade is subjected to a lateral component of force that comes from only one side, which is unfavorable for drilling precision and service life of the drill blade.

### Summary of the Invention

An object of the disclosure is to provide an eccentric drill blade configured for drilling hard materials and a drill bit comprising such an eccentric drill blade, by means of which drilling precision can be increased while drilling quality and service life of the drill blade can be ensured.

According to one aspect of the disclosure, a drill blade for drilling hard materials is provided, the drill blade defining a rotation axis and comprising:
a first side face and a second side face, located on first and second lateral sides with respect to the rotation axis respectively;
a blade apex offset laterally from the rotation axis by a lateral offset distance; and
a first cutting edge and a second cutting edge, both extending from the blade apex and terminated on the first and second side faces respectively;
wherein the bisector of an angle formed between the first and second cutting edges is oblique with respect to the rotation axis by an oblique angle.

In an embodiment, the orientation of the angle bisector between the first and second cutting edges with respect to the rotation axis is determined such that the intersection point between the angle bisector and the rotation axis or a point on the angle bisector that is nearest to the rotation axis is backward from the blade apex in the axial direction.

In an embodiment, ends of the first and second cutting edges are located on the first and second side faces respectively, at axial positions different from each other.

In an embodiment, the blade apex is offset towards the second lateral side from the rotation axis, and the end of the second cutting edge on the second side face has an axial position located backwardly with respect to the axial position of the end of the first cutting edge on the first side face.

In an embodiment, the lateral offset distance and the oblique angle are designed in combination such that, in a drilling operation, the first and second cutting edges each include an effective cutting segment which participates in cutting the material of a workpiece and a non-cutting segment which does not cut the material of the workpiece.

In an embodiment, the lateral offset distance and the oblique angle is further designed in combination to achieve one or more of the optimization targets of:
the difference between the length of the first cutting edge and the length of the second cutting edge is minimized, for example to be smaller than a predetermined length-difference threshold;
in a drilling operation, the difference between the length of the effective cutting segment of the first cutting edge and the length of the effective cutting segment of the second cutting edge is minimized, for example smaller than a predetermined effective-cutting-length-difference threshold; and
in a drilling operation, lateral components of acting forces that the first and second cutting edges receive from the material of the workpiece are counterbalanced with each other to a maximum extent; for example, a lateral resultant force resulted from the opposing lateral components of the acting forces is smaller than a predetermined lateral-force threshold.

In an embodiment, the lateral offset distance that the blade apex is offset from the rotation axis is larger than 0 and smaller than the drilling radius of the drill blade, preferably smaller than a half of the drilling radius, and most preferably smaller than 1/3 of the drilling radius.

In an embodiment, the oblique angle of the angle bisector between the first and second cutting edges with respect to the rotation axis is larger than 0 degree and smaller than 45 degrees, preferably smaller than 30 degrees.

In an embodiment, at least one of the first and second cutting edges is composed of two or more successively continuous edge segments.

According to another aspect of the disclosure, a drill bit for drilling hard materials is provided, which comprises:
a drill blade as described above, which is mounted to, for example welded to, a main body of the drill bit.

According to the disclosure, the drill blade comprises a blade apex that is offset (eccentric) from the rotation axis of the drill bit and an a central line of the cutting edges (the bisector of the angle formed between the cutting edges) that is oblique with respect to the rotation axis of the drill bit by an angle. During drilling, on opposite sides with respect to the rotation axis of the drill bit, each cutting edge has a potion that contacts the workpiece. As a result, the real contact area between the cutting edges and the workpiece is decreased so the intensity of pressure is increased and the drilling speed is also increased. In addition, the workpiece applies pressure forces to the drill blade on opposite sides with respect to the rotation axis of the drill bit, and lateral components of the two pressure force can be at least partly counterbalanced with each other, so drilling precision and service life of the drill blade can be increased.

### Brief Description of the Drawings

Figure 1 and Figure 2 are schematic views of drill blades according to prior art;
Figure 3 is a front view of a drill blade according to an embodiment of the disclosure;
Figure 4 is an enlarged bottom view of the drill blade shown in Figure 3;
Figure 5 is a schematic view showing some dimensions of the drill blade shown in Figure 3;
Figure 6 shows two angular positions of the drill blade shown in Figure 3 with no axial advancement;
Figure 7 shows two angular positions of the drill blade shown in Figure 3 with a segment of axial advancement;
Figure 8 shows portions of the drill blade shown in Figure 3 that contact a workpiece during drilling;
Figure 9 is a schematic view of a drill blade according to another embodiment of the disclosure;
Figure 10 shows two angular positions of the drill blade shown in Figure 9 with a segment of axial advancement;
Figure 11 shows portions of the drill blade shown in Figure 9 that contact a workpiece during drilling; and
Figure 12 and Figure 13 are schematic views of drill blades according to other embodiments of the disclosure.

### Detailed Description of Preferred Embodiments

Now some embodiments of the drill blade and drill bit according to the disclosure will be described with reference to the drawings.

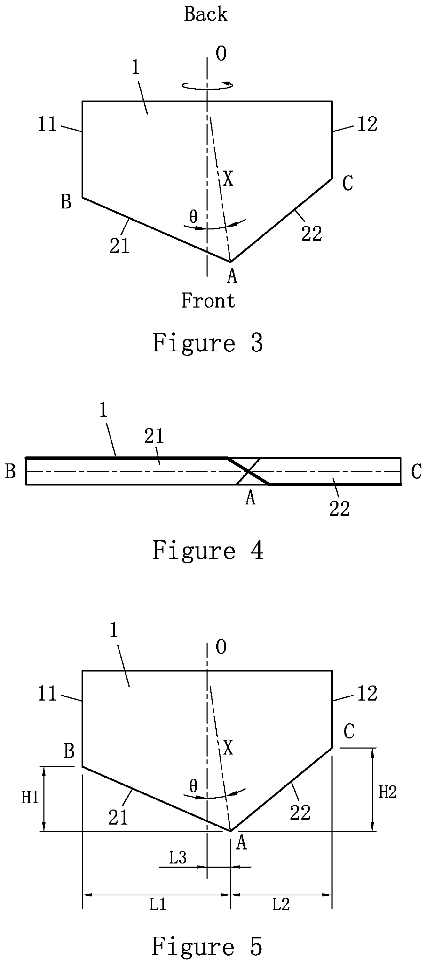

A drill blade (drill tip) 1, to be used in a drill bit, according to an embodiment of the disclosure is shown in Figure 3 to Figure 8. The drill blade 1 is formed of a carbide, takes the form of a flat plate, and is welded to a main body (not shown) of a drill bit such that it can be used for drilling hard materials, for example, ceramics, stones, metals, hardwoods and the like.

As shown in Figure 3, the drill blade 1 has a first side face 11 and a second side face 12. Optionally, in the state that the drill blade 1 is mounted to a main body (not shown) of a drill bit, the first and second side faces 11 and 12 are parallel to the rotation axis O of the drill bit (which is also the rotation axis of the drill blade 1), and located on opposite lateral sides with respect to the rotation axis O at the same lateral distance from the rotation axis O. Of course, the configuration of the first and second side faces is not limited to that shown here, other configurations of them can also be used in the drill blade of the disclosure. As an example, the first and second side faces can be parallel to each other but not parallel to the rotation axis. As another example, the first and second side faces can be not parallel to each other.

Further, the drill blade 1 has a first cutting edge 21 on a first lateral side and a second cutting edge 22 on a second lateral side. The two cutting edges 21 and 22 are jointed at an apex A, which is the most front portion of the drill blade 1, and extend in opposite directions from the apex A to ends B and C on the side faces 11 and 12 of the drill blade 1 respectively. The apex A is offset laterally from the rotation axis O of the drill bit by a lateral distance. The drill bit, in drilling operations, rotates around the rotation axis O. In addition, the bisector X of an angle formed between the two cutting edges 21 and 22 is oblique with respect to the rotation axis O by an angle θ. The orientation, or oblique direction, of the angle bisector X is determined such that the intersection point of the angle bisector X and the rotation axis O (or the point on the angle bisector X which is nearest to the rotation axis O) is at a location that is axially backward from the apex A.

In the disclosure, "front" indicates the direction that the drill bit drills into a workpiece, which is also the direction that the drill bit points to, and "back" indicates the direction opposite to the direction that the drill bit points to, which is also the direction towards the shank of a drill.

The laterally offset distance of the apex A from the rotation axis O of the drill bit and the oblique angle θ of the angle bisector X between the cutting edges with respect to the rotation axis O are designed in combination such that the ends of the two cutting edges 21 and 22 have axial positions different from each other so that, for example, the difference in the lengths of the two cutting edges 21 and 22 is as small as possible (for example, smaller than a predetermined threshold for the length difference between the cutting edges), and at most there is no difference between them. In the embodiment shown in Figure 3, the apex A is located at a second lateral side of the drill blade 1, and the end C of the second cutting edge 22 is located at an axially backward location with respect to the end B of the first cutting edge 21.

It can be understood that, since the drill blade 1 has a certain thickness, the two cutting edges 21 and 22 become sharp gradually in general; that is to say, they become sharp front lines from the thickness of the main body of the drill blade 1 gradually. For some forms of the drill blade 1, the front lines of the two cutting edges 21 and 22 are co-planar (for example, both of them pass through the thickness-direction center of the cutting edges). Thus, by using the co-planar front lines of the cutting edges as a reference, it is easy to measure the dimensions and angles related with the cutting edges or to define the bisector of the angle formed between the cutting edges. However, for some other forms of the drill blade 1, the two cutting edges 21 and 22 are not co-planar. For example, as illustrated in Figure 4, the front lines (represented by thickened lines in the Figure) of the first and second cutting edges 21 and 22 mainly lie in main surfaces of the drill blade 1 respectively, and the apex A is formed at a transition portion between the front lines of the first and second cutting edges 21 and 22. Considering that the first and second cutting edges 21 and 22 have such a thickness, when the dimensions, angles and positions related with the two cutting edges 21 and 22 are to be discussed or the angle bisector between them is to be defined, a central line (the thickness-direction central line connected between the ends B and C) between the two cutting edges 21 and 22 is used as a reference.

As illustrated in Figure 5, the first and second cutting edges 21 and 22 have first and second lateral dimensions L1 and L2 in a lateral direction and first and second axial dimensions H1 and H2 in an axial direction. The first lateral dimension L1 is larger than the second lateral dimension L2, and the first axial dimension H1 is smaller than the second axial dimension H2.

For most embodiments of the disclosure, the ends B and C may be located at the same lateral distance from the rotation axis O.

The apex A is laterally offset from the rotation axis O by a dimension L3 which is larger than 0 and smaller than the drilling radius of the drill bit (the radius of the bore to be drilled by the drill bit). In real design, it is feasible that the dimension L3 by which the apex A is laterally offset from the rotation axis O is smaller than a half or even 1/3 of the drilling radius of the drill bit.

The oblique angle θ is set to be larger than 0 degree. In real design, it is feasible that the oblique angle θ is selected to be smaller than 45 degrees or even smaller than 30 degrees.

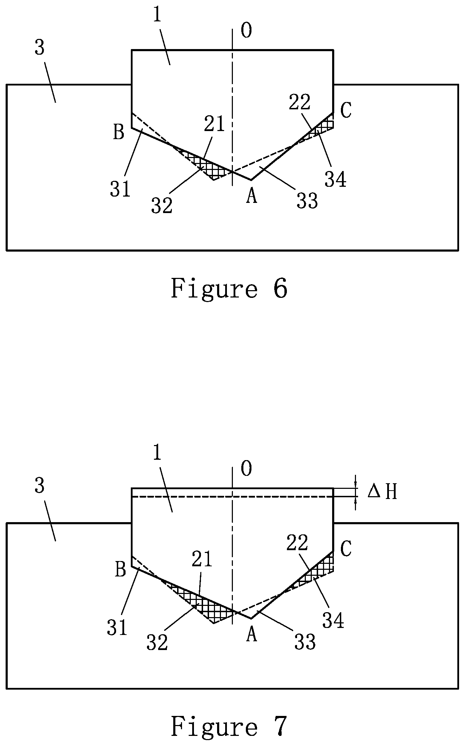

For describing the technical effect of the above drill blade 1, two angular positions, which are different from each other by 180 degrees, of the drill blade 1 are illustrated in Figure 6. The first angular position of the drill blade 1 is represented by solid lines, and the second angular position of the drill blade 1, which is obtained by rotating the drill blade 1 by 180 degrees around the rotation axis O, is represented by broken lines. In this Figure, the two angular positions are presented in the same axial position.

As schematically illustrated in Figure 6, in the material of a workpiece 3 that are faced by the first cutting edge 21 and the second cutting edge 22 in the second angular position, some portions of the material have been already removed by the second cutting edge 22 and the first cutting edge 21 when they are in the first angular position. Thus, in the second angular position, the second cutting edge 22 faces towards an empty area (without material) 31 and a solid area (with material remained here, as illustrated by shading lines) 32, and the first cutting edge 21 also faces towards an empty area (without material) 33 and a solid area (with material remained here, as illustrated by shading lines) 34. Thus, in the second angular position, the first and second cutting edges only need to remove the material in the solid areas 34 and 32 respectively.

Figure 7 shows the two angular positions with their axial position difference. In details, the drill blade 1 in the second angular position is advanced forwards in the axial direction by a distance ΔH with respect to the first angular position. It can be seen that, as compared with the condition shown in Figure 6, when there is an axially advancing distance, the solid areas 32 and 34 become larger and the empty areas 31 and 33 become smaller. It can be conceived from the comparison that, as the axially forward pushing force applied to the drill blade 1 increased, the volume of the material that can be removed by the first and second cutting edges becomes larger and thus drilling speed is increased.

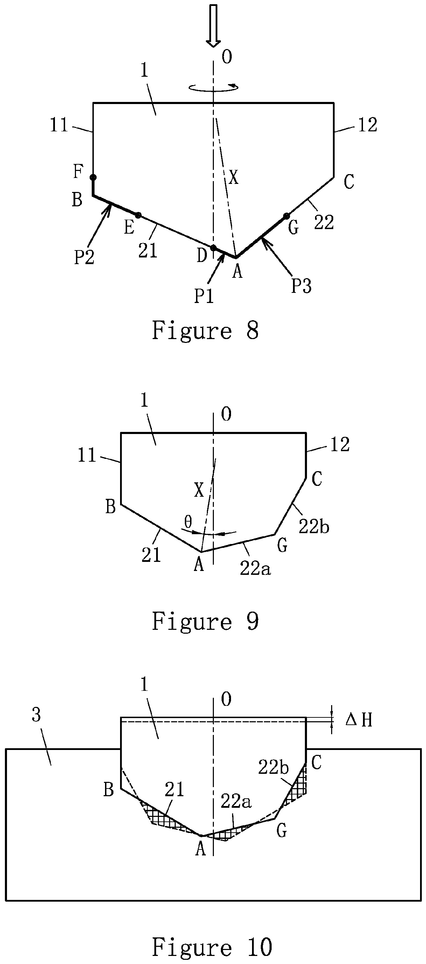

It can be contemplated from the above description that, by using the drill blade 1 which has obliquely oriented eccentric cutting edges, in each time in the drilling operation, only portions of both the first and second cutting edges that face towards the solid areas remove the material, while no material needs to be removed by portions of the first and second cutting edges that face towards the empty areas. Not all the lengths of the two cutting edges of the drill blade 1 of the disclosure are used to cut material in the drilling process. Only effective cutting lengths of the two cutting edges (portions of the two cutting edges that face towards the solid areas) really remove material in the drilling process. Figure 8 schematically shows effective cutting segments (represented by thick solid lines) of the two cutting edges. In Figure 8, the effective cutting segments of the first cutting edge 21 comprise a segment AD and a segment BE, and the effective cutting segment of the second cutting edge 22 comprises a segment AG. A segment BF on the first side face 11, which is continuous to the end B, may also act to cut material. Points D and E are on the first cutting edge 21, point G is on the second cutting edge 22, and point F is on the first side face 11. All these points can be determined with reference to the condition shown in Figure 6 and Figure 7. Considering that the advancing speed of the drill bit in a drilling process may be variable, the locations of these points are not always fixed.

Compared with the traditional drill blade having a symmetric configuration, not all the lengths of the two cutting edges of the drill blade 1 of the disclosure participate in removing material in a drilling process, and only effective cutting lengths of the two cutting edges (portions of the two cutting edges that face towards the solid areas) really remove material is the drilling process. The effective cutting length of either cutting edge is smaller than the whole length of it, so the intensity of pressure at the contact areas between the cutting edges and the material of the workpiece is increased and the drilling speed can be thus increased. In addition, it does not need to increase the sharpness of the front line of the cutting edge for increasing the drilling speed, so service life of the drill blade 1 can be prolonged.

Further, as can be seen from Figure 8, the material of the workpiece applies pressure forces P1, P2 and P3 to the drill blade 1 at the effective cutting segments AD and BE of the first cutting edge 21 and the effective cutting segment AG of the second cutting edge 22 respectively. Axial components of these pressure forces resist against the axial pushing force that an operator applies to the drill bit, and radial (lateral) components of these pressure forces are counterbalanced with each other so that radial (lateral) components of the pushing forces applied to the drill blade 1 from the material are at least partly balanced. As a result, the position of the rotation axis of the drill blade 1 can be maintained with fewer disturbances, and thus drilling precision can be improved.

When the values of the laterally offset dimension of the apex A from the rotation axis O of the drill bit and the oblique angle θ of the angle bisector X between the cutting edges with respect to the rotation axis O are to be determined, in addition to the factor that the difference between the lengths of the two cutting edges 21 and 22 should be minimized as described above as an example, other factor like this listed below may also be considered in combination: to minimize the difference between the effective cutting lengths of the two cutting edges (for example, to be smaller than a predetermined threshold for the length difference between the effective cutting segments) in normal drilling operations to balance the consumption of the two cutting edges as much as possible (which may be advantageous in prolonging service life of the drill blade 1). Alternatively, by taking into consideration of other factors, the lateral components of the acting forces that the two cutting edges receive from the material of the workpiece during normal drilling operations should be counterbalanced with each other as much as possible (for example, a lateral resultant force obtained from opposite lateral components of the acting forces should be smaller than a predetermined lateral force threshold).

Based on the principle described above, various configurations of the drill blade can be designed. For example, in the embodiment described above, a straight cutting edge is formed on either side with respect to the apex A, while according to a variant of the disclosure, at least one of the two cutting edges can be designed to be non-straight which includes more than one segment.

As an example, in an embodiment shown in Figure 9, the drill blade 1 comprises a first cutting edge 21 on a first lateral side with respect to the apex A and a second cutting edge on a second lateral side with respect to the apex A, the second cutting edge being composed of a first edge segment 22a and a second edge segment 22b which form an angle therebetween. The first cutting edge 21 starts from the apex A and ends at point B on the first side face 11 of the drill blade 1. The first and second edge segments 22a and 22b meet at point G on the second side with respect to the apex A. The first edge segment 22a starts from the apex A and ends at point G, and the second edge segments 22b starts from point G and ends at point C on the second side face 12 of the drill blade 1. In the axial direction, the axial position of point G is between the apex A and point B, and point C is at an axial position different from point B. Further, the axial and lateral positions of point G are designed in combination so that a convex angle is formed at point G.

Further, the apex A is laterally offset from the rotation axis O by a lateral distance, and the angle bisector X between the first cutting edge 21 and the first edge segment 22a of the second cutting edge is oblique with respect to the rotation axis O by an angle θ. The orientation, or oblique direction, of the angle bisector X is set such that the intersection point of the angle bisector X and the rotation axis O (or the point on the angle bisector X which is nearest to the rotation axis O) is at a position axially backward with respect to the apex A.

Figure 10 schematically shows two angular positions of the drill blade 1 shown in Figure 9. In Figure 10, the first angular position of the drill blade 1 is represented by solid lines, and the second angular position, which is a position got by rotating the drill blade 1 around the rotation axis O by 180 degrees and advancing it in the axial direction by a distance ΔH with respect to the first angular position, is represented by broken lines.

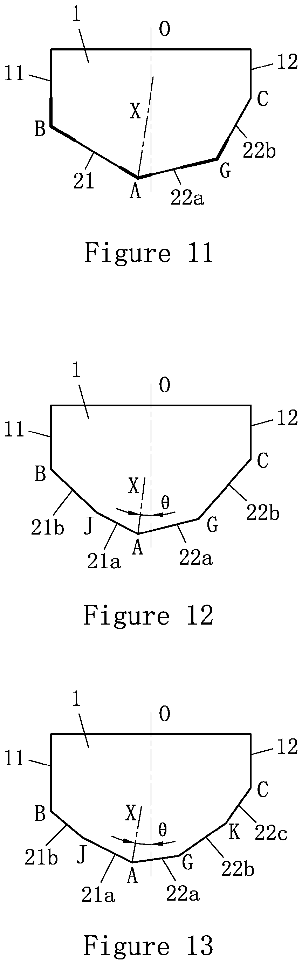

As schematically shown in Figure 10, in the second angular position, the first and second cutting edges face towards corresponding empty areas (without material) and solid areas (with material remained here, as illustrated by shading lines), and thus the first and second cutting edges only need to remove the material in the solid areas they face respectively in the second angular position. Effective cutting segments of opposite cutting edges of the drill blade 1 shown in Figure 9 are represented by solid lines in Figure 11. It can be seen that, both cutting edges include effective cutting segments at the same time, and thus radial (lateral) components of the pressure forces that the two cutting edges receive from the material of the workpiece are at least partly counterbalanced with each other, by means of which, drilling precision can be improved. In addition, the total length of effective cutting segments of each cutting edge is smaller than the whole length of the same cutting edge, so the drilling speed can be increased.

The features described above with reference to the embodiment shown in Figure 3 to Figure 8 are basically applicable in the embodiment shown in Figure 9 to Figure 11, and the description to them is omitted here.

In an embodiment shown in Figure 12, a first cutting edge on a first lateral side with respect to the apex A is composed of a first edge segment 21a and a second edge segment 21b, and a second cutting edge on a second lateral side with respect to the apex A is composed of a first edge segment 22a and a second edge segment 22b. The first and second edge segments 21a and 21b meet at point J. The first and second edge segments 22a and 22b meet at point G. In the axial direction, points A, B, C, G and J are at axial positions different from each other, and a convex angle is formed at each of points G and J. The apex A is laterally offset from the rotation axis O by a lateral distance, and the angle bisector X between the first edge segment 21a of the first cutting edge and the first edge segment 22a of the second cutting edge is oblique with respect to the rotation axis O by an angle θ. The orientation, or oblique direction, of the angle bisector X is set in the same way as described with reference to the above embodiments. The features and technic effect described above with reference to the embodiment shown in Figure 3 to Figure 8 are basically applicable in the embodiment shown in Figure 12, and the description to them is omitted here.

In an embodiment shown in Figure 13, a first cutting edge on a first lateral side with respect to the apex A is composed of a first edge segment 21a and a second edge segment 21b, and a second cutting edge on a second lateral side with respect to the apex A is composed of a first edge segment 22a, a second edge segment 22b and a third edge segment 22c. The first and second edge segments 21a and 21b meet at point J. The first and second edge segments 22a and 22b meet at point G, and the second and third edge segments 22b and 22c meet at point K. In the axial direction, points A, B, C, G, J and K are at axial positions different from each other, and a convex angle is formed at each of point G, J and K. The apex A is laterally offset from the rotation axis O by a lateral distance, and the angle bisector X between the first edge segment 21a of the first cutting edge 21 and the first edge segment 22a of the second cutting edge is oblique with respect to the rotation axis O by an angle θ. The orientation, or oblique direction, of the angle bisector X is set in the same way as described with reference to the above embodiments. The features and technic effect described above with reference to the embodiment shown in Figure 3 to Figure 8 are basically applicable in the embodiment shown in Figure 13, and the description to them is omitted here.

Other possible embodiments can also be designed by those skilled in the art.

Generally speaking, the drill blade of the disclosure comprises first and second cutting edges. The two cutting edges start from a blade apex and end at laterally opposite side faces of the drill blade. The blade apex is offset from the rotation axis of the drill blade by a lateral distance, and the bisector of an angle formed between the first and second cutting edges is oblique with respect to the rotation axis by an angle. Ends of the two cutting edges are located at axial positions different from each other. By means of the combination of these features, in the drilling operation, only a portion of each one of the first and second cutting edges contacts and removes the material of a workpiece. Thus, compared with a symmetric drill blade, the intensity of pressure between the cutting edges and the material of the workpiece is increased, and drilling speed and efficiency can be improved.

Further, it does not need to increase the sharpness of the cutting edge for increasing the drilling speed, so the cutting edges have increased resistance to wear. In addition, in the drilling operation, the two cutting edges both undergo wear, so the wear speeds of the two cutting edges are balanced. All these factors contribute to longer service life of the drill blade.

Further, in the drilling operation, radial (lateral) components of pressure forces that the two cutting edges receive from the material of the workpiece can be counterbalanced with each other to a certain extent, so misplacement of the drill bit under lateral pushing forces can be avoided, and thus drilling precision can be increased.

While certain embodiments have been described, these embodiments have been presented by way of example only, and are not intended to limit the scope of the present disclosure. The attached claims and their equivalents are intended to cover all the modifications, substitutions and changes as would fall within the scope and spirit of the present disclosure.

## Claims

1. A drill blade configured for drilling hard materials, the drill blade defining a rotation axis and comprising:
a first side face (11) and a second side face (12), located on first and second lateral sides with respect to the rotation axis respectively;
a blade apex (A) offset laterally from the rotation axis by a lateral offset distance; and
a first cutting edge (21) and a second cutting edge (22), both extending from the blade apex and terminated on the first and second side faces respectively;
wherein the bisector (X) of an angle formed between the first and second cutting edges is oblique with respect to the rotation axis by an oblique angle (θ).

2. The drill blade of claim 1, wherein the orientation of the angle bisector between the first and second cutting edges with respect to the rotation axis is determined such that the intersection point between the angle bisector and the rotation axis or a point on the angle bisector that is nearest to the rotation axis is backward from the blade apex in the axial direction.

3. The drill blade of claim 1 or 2, wherein ends of the first and second cutting edges are located on the first and second side faces respectively, at axial positions different from each other.

4. The drill blade of claim 3, wherein the blade apex is offset towards the second lateral side from the rotation axis, and the end (C) of the second cutting edge on the second side face has an axial position located backwardly with respect to the axial position of the end (B) of the first cutting edge on the first side face.

5. The drill blade of any one of claims 1 to 4, wherein the lateral offset distance and the oblique angle are designed in combination such that, in a drilling operation, the first and second cutting edges each include an effective cutting segment which participates in cutting the material of a workpiece and a non-cutting segment which does not cut the material of the workpiece.

6. The drill blade of claim 5, wherein the lateral offset distance and the oblique angle is further designed in combination to achieve one or more of the optimization targets of:
the difference between the length of the first cutting edge and the length of the second cutting edge is minimized, for example to be smaller than a predetermined length-difference threshold;
in a drilling operation, the difference between the length of the effective cutting segment of the first cutting edge and the length of the effective cutting segment of the second cutting edge is minimized, for example smaller than a predetermined effective-cutting-length-difference threshold; and
in a drilling operation, lateral components of acting forces that the first and second cutting edges receive from the material of the workpiece are counterbalanced with each other to a maximum extent; for example, a lateral resultant force resulted from the opposing lateral components of the acting forces is smaller than a predetermined lateral-force threshold.

7. The drill blade of any one of claims 1 to 6, wherein the lateral offset distance that the blade apex is offset from the rotation axis is larger than 0 and smaller than the drilling radius of the drill blade, preferably smaller than a half of the drilling radius.

8. The drill blade of any one of claims 1 to 7, wherein the oblique angle of the angle bisector between the first and second cutting edges with respect to the rotation axis is larger than 0 degree and smaller than 45 degrees, preferably smaller than 30 degrees.

9. The drill blade of any one of claims 1 to 8, wherein at least one of the first and second cutting edges is composed of two or more successively continuous edge segments.

10. A drill bit for drilling hard materials comprising:
a drill blade of any one of claims 1 to 9, mounted to, for example welded to, a main body of the drill bit.
